# EUROPEAN PATENT APPLICATION

(11) **EP 4 345 355 A1**
(43) Date of publication of application: **03.04.2024**
(21) Application number: 23199612.5
(22) Date of filing: 26.09.2023
(51) Int. Cl.: F16L 37/098

(54) **CONNECTOR AND SOCKET**

(30) Priority: 29.09.2022 JP 2022157102
(71) Applicant: Sanoh Industrial Co., Ltd., Shibuya-ku Tokyo 150-0002 (JP)
(72) Inventor: Shinbo, Takaya, Ibaraki, 306-0041 (JP)
(74) Representative: dompatent von Kreisler Selting Werner - Partnerschaft von Patent- und Rechtsanwälten mbB

(57) **Abstract**

A connector 20 includes a plug 22 including an engaged portion, and a socket 40. The socket includes a tube body 42, a holding member 44 disposed to be movable in an axial direction of the tube body 42 and including an engagement portion 62 configured to resiliently engage with the engaged portion of the plug 22 when the plug 22 is inserted into the tube body 42, and a cover member 80 including a blocking portion 46 and a permitting portion 48. The blocking portion 46 is disposed further toward a radial direction outer side of the tube body 42 than the holding member 44 and blocks an action to release engagement of the engagement portion with the engaged portion. The permitting portion 48 is formed at a position on the cover member 80 further toward a side of an insertion direction of the side than the blocking portion 46 and permits the action to release engagement of the engagement portion with the engaged portion.

## Description

### BACKGROUND

### Technical Field

The present disclosure relates to a connector and a socket.

### Related Art

A pipe joint is disclosed in Japanese Patent No. 6328691 in which a coupling-lock is performed between a female pipe joint and a male pipe joint by fitting a ball shaped locking element of the female pipe joint into a ring shaped locking recess provided at an outer peripheral face of the male pipe joint, and by a locking sleeve biased by a coil spring holding the ball shaped locking element in place from a radial direction outer side in this state.

However, the pipe joint disclosed in Japanese Patent No. 6328691 has a complicated configuration needed for the coupling-lock due to including the ball shaped locking element on the locking sleeve and including the coil spring to bias the ball shaped locking element.

### SUMMARY

The present disclosure is directed toward a connector in which a plug and a socket are coupled together by an engagement portion of the socket being engaged with an engaged portion of the plug, and provides technology that enables coupling of the plug and the socket, and coupling release thereof, to be realized with a simple configuration.

A connector of a first aspect of the present disclosure includes a plug including an engaged portion provided on an outer peripheral face and a socket. The socket includes a tube body, a holding member that is disposed at a radial direction outer side of the tube body so as to be movable in an axial direction of the tube body and that includes an engagement portion configured to resiliently engage with the engaged portion of the plug when the plug is inserted into the tube body, and a cover member including a blocking portion that is disposed further toward a radial direction outer side of the tube body than the holding member and that blocks an action to release engagement of the engagement portion with the engaged portion, and including a permitting portion that is disposed at a position on the cover member further toward a side of an insertion direction of the plug than the blocking portion and that permits the action to release engagement of the engagement portion with the engaged portion.

In the connector of the first aspect, the engagement portion of the holding member resiliently engages with the engaged portion of the plug by the plug being inserted inside the tube body. The plug is thereby coupled to the tube body, namely to the socket, through the holding member. In the connector, the action to release engagement of the engagement portion is blocked when the engagement portion of the holding member is at a position of the blocking portion of the cover member, and so the coupling between the plug and the socket is maintained. Moreover, in the connector, the action to release engagement of the engagement portion is permitted when the engagement portion of the holding member is at the position of the permitting portion of the cover member (for example, when the engagement portion of the holding member has been moved from the position of the blocking portion of the cover member to the position of the permitting portion thereof). The engaged state between the engagement portion and the engaged portion is released by the engagement release action, and the socket separates from the plug and coupling is released.

In the connector described above, coupling between the plug and the socket, and coupling release thereof, is able to be performed by a simple configuration in the socket in which the blocking portion and the permitting portion are provided at the cover member and also the engagement portion is provided at the holding member.

A connector of a second aspect of the present disclosure is the connector of the first aspect, wherein the engaged portion is configured by an indentation shaped portion formed at an outer peripheral face of the plug, the holding member includes a resilient plate portion that extends along an axial direction of the tube body and that has an end portion on an opposite side from the plug insertion direction configured by a free end, the engagement portion is configured by a projection portion that projects from the end portion on the opposite side from the plug insertion direction toward a radial direction inner side of the tube body and that is insertable into the indentation shaped portion, and the permitting portion is configured by a recess that is formed at an inner face of the cover member and that permits movement under resilient deformation of the resilient plate portion toward a radial direction outer side of the end portion of the resilient plate portion on the opposite side from the insertion direction.

In the connector of the second aspect, the indentation shaped portion and the projection portion are engaged by the projection portion serving as the engagement portion being inserted into the indentation shaped portion serving as the engaged portion, coupling the plug and the socket together. Moreover in the connector, an action to release engagement of the projection portion is permitted when the projection portion of the holding member is at the position of the recess serving as the permitting portion of the cover member. More specifically, movement of an end portion of the resilient plate portion at the opposite side from the plug insertion direction toward the radial direction outer side under resilient deformation of the resilient plate portion is permitted by the recess. When the resilient plate portion has been resiliently deformed and the end portion at the opposite side from the plug insertion direction has been moved to the radial direction outer side, the projection portion comes out from the indentation shaped portion, the plug separates from the socket and coupling is released.

In the connector described above, coupling between the plug and the socket, and coupling release thereof, is able to be performed by a simple structure in which the engaged portion of the plug is configured by the indentation shaped portion, and the engagement portion and the permitting portion of the socket are respectively configured by the projection portion and the recess.

A connector of a third aspect of the present disclosure is the connector of the second aspect, wherein the recess is a through hole penetrating the cover member in a thickness direction.

In the connector of the third aspect, the recess of the socket is configured by the through hole penetrating the cover member in a thickness direction, and so this thereby enables the position of the holding member disposed inside the tube body to be visually inspected from the outside of the socket through the through hole.

A connector of a fourth aspect of the present disclosure is the connector of the second aspect or the third aspect, wherein the plate width of the resilient plate portion is narrower at a base side portion than at a free end side portion.

In the connector of the fourth aspect, the plate width of the resilient plate portion is narrower at the base side portion than at the free end side portion and so control of the resilient deformation amount of the resilient plate portion is easier than, for example, a configuration in which the plate width of the resilient plate portion is not less than the plate width of the free end side portions thereof.

A connector of a fifth aspect of the present disclosure is the connector of any one of the first aspect to the fourth aspect, wherein the holding member includes an engaging claw, and the tube body includes a pull-out prevention portion that is provided at a peripheral wall and that blocks the holding member from being pulled out from the tube body by the engaging claw hooking onto the pull-out prevention portion.

In the connector of the fifth aspect, the holding member is blocked from coming out from the tube body by the engaging claw of the holding member hooking onto the pull-out prevention portion of the tube body. The holding member can thereby be prevented from falling out from the socket prior to the coupling the plug.

A connector of a sixth aspect of the present disclosure is the connector of the fifth aspect, wherein when the engagement portion of the holding member is at a position of the blocking portion of the tube body, the engaging claw hooks onto the pull-out prevention portion.

In the connector of the sixth aspect, the engaging claw hooks onto the pull-out prevention portion when the engagement portion of the holding member is at the position of the blocking portion of the tube body and so coupling between the plug and the socket can be maintained better than, for example, configurations in which the engaging claw hooks onto the pull-out prevention portion when the engagement portion is at a position after passing the blocking portion.

A connector of the seventh aspect of the present disclosure is the connector of the sixth aspect wherein a biasing member is disposed inside the tube body to bias the plug inserted through the holding member toward an opposite side from the plug insertion direction, and the engaging claw is hooked onto the pull-out prevention portion by biasing force of the biasing member.

In the connector of the seventh aspect, the engaging claw is hooked onto the pull-out prevention portion by the plug when the plug is inserted into the tube body being biased toward the opposite side from the insertion direction by biasing force of the biasing member. The engagement portion of the holding member is at the position of the blocking portion of the cover member in a state in which the engaging claw is hooked onto the pull-out prevention portion and so the action to release engagement of the engagement portion is blocked, and coupling between the plug and the socket is maintained. Namely, in the connector, the coupling between the plug and the socket can be maintained by the biasing force of the biasing member.

A connector of an eighth aspect of the present disclosure is the connector of any one of the first aspect to the seventh aspect, wherein the cover member is movable in the axial direction and is biased toward the opposite side from the plug insertion direction.

In the connector of the eighth aspect, the cover member is biased toward the opposite side from the plug insertion direction, and so the cover member can be confined to a specific position in a coupled state of the plug and the socket. Namely, definite positions can be achieved for the tube body axial direction positions of the blocking portion and the permitting portion in the coupled state of the plug and the socket. This thereby enables the plug to be suppressed from falling out from the socket.

A connector of a ninth aspect of the present disclosure is the connector of any one of the first aspect to the eighth aspect, wherein there are plural of the holding members are disposed spaced apart from each other in a circumferential direction of the tube body.

In a connector of the ninth aspect, there are plural of the holding members including the engagement portions are disposed spaced apart from each other in the circumferential direction of the tube body, thereby achieving a simple structure of holding member compared, for example, to a configuration in which plural engagement portions are provided at a single holding member of the tube body, and improving the moldabilty of the holding members.

A socket of a tenth aspect of the present disclosure includes a tube body, a holding member that is disposed at a radial direction outer side of the tube body so as to be movable in an axial direction of the tube body and that includes an engagement portion configured to resiliently engage with an engaged portion provided at an outer peripheral face of a plug that is insertable into the tube body, and a cover member. The cover member includes a blocking portion that is disposed further toward a radial direction outer side of the tube body than the holding member and that blocks an action to release engagement of the engagement portion with the engaged portion, and a permitting portion that is disposed at a position on the cover member further toward a side of an insertion direction of the plug than the blocking portion and that permits the action to release engagement of the engagement portion with the engaged portion.

In the socket of the tenth aspect, the engagement portion of the holding member resiliently engages with the engaged portion of the plug by the plug being inserted inside the tube body. The plug is thereby coupled to the tube body, namely to the socket, through the holding member. Moreover in the socket, the action to release engagement of the engagement portion is blocked when the engagement portion of the holding member is at the position of the blocking portion of the cover member, and so the coupling to the plug is maintained. Moreover in the socket, the action to release engagement of the engagement portion is permitted when the engagement portion of the holding member is at the position of the permitting portion of the cover member (for example, when the engagement portion of the holding member has been moved from the position of the blocking portion of the cover member to the position of the permitting portion thereof). The engaged state between the engagement portion and the engaged portion is released by the engagement release action, and the socket separates from the plug and coupling is released.

In the socket described above, coupling to the plug, and release of such coupling, can be performed with a simple configuration in which the blocking portion and the permitting portion are provided at the cover member and also the engagement portion is provided at the holding member.

As described above, the present disclosure is able, in a connector in which a plug and a socket are coupled together by an engagement portion of the socket engaging with an engaged portion of the plug, to provide technology that enables a simple configuration to be employed to couple the plug and socket and to release the coupling thereof.

### BRIEF DESCRIPTION OF THE DRAWINGS

Exemplary embodiments of the present invention will be described in detail based on the following figures, wherein:
Fig. 1 is a side view of a connector according to an exemplary embodiment of the present disclosure;
Fig. 2 is a side-view cross-section of the connector of Fig. 1;
Fig. 3 is a cross-section of the connector of Fig. 2 with a plug and a socket taken apart;
Fig. 4 is an exploded cross-section of the socket of Fig. 3 in which each configuration member has been taken apart;
Fig. 5 is an exploded cross-section in which each configuration member of the plug of Fig. 3 has been taken apart;
Fig. 6A is an enlarged perspective view of a retainer of the socket of Fig. 2;
Fig. 6B is an enlarged perspective view of a leading end portion of the plug of Fig. 2;
Fig. 7 is a side-view cross-section to explain a coupling procedure of a plug and a socket configuring a connector according to an exemplary embodiment of the present disclosure, and illustrates a state immediately after starting to insert the plug into the socket;
Fig. 8 is an enlarged diagram of a portion indicted by arrow 8X in Fig. 7;
Fig. 9 is a side-view cross-section of Fig. 7 and illustrates a state in which an inside projection portion of a retainer has been inserted into an indentation shaped portion of a plug;
Fig. 10 is an enlarged diagram of a portion indicted by arrow 10X in Fig. 9, and illustrates a state in which a slide cover has been pushed back;
Fig. 11 is a side-view cross-section of Fig. 9 and illustrates a state in which a slide cover has been slid in a plug insertion direction;
Fig. 12 is an enlarged diagram of a portion indicted by arrow 12X in Fig. 11;
Fig. 13 is a side-view cross-section of Fig. 11 and illustrates a state in which a plug has been pushed out from a socket while a slide cover is maintained in a state slid in an insertion direction of the plug; and
Fig. 14 is an enlarged diagram of a portion indicted by arrow 14X in Fig. 13, and illustrates a state in which slide cover has been pushed back.

### DETAILED DESCRIPTION

Explanation follows regarding a connector and a socket of an exemplary embodiment according to the present disclosure, with reference to the drawings.

### Connector 20

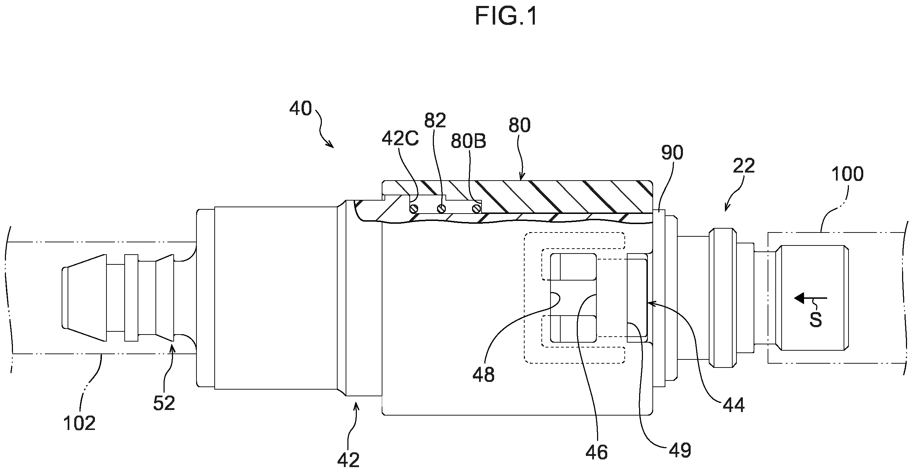

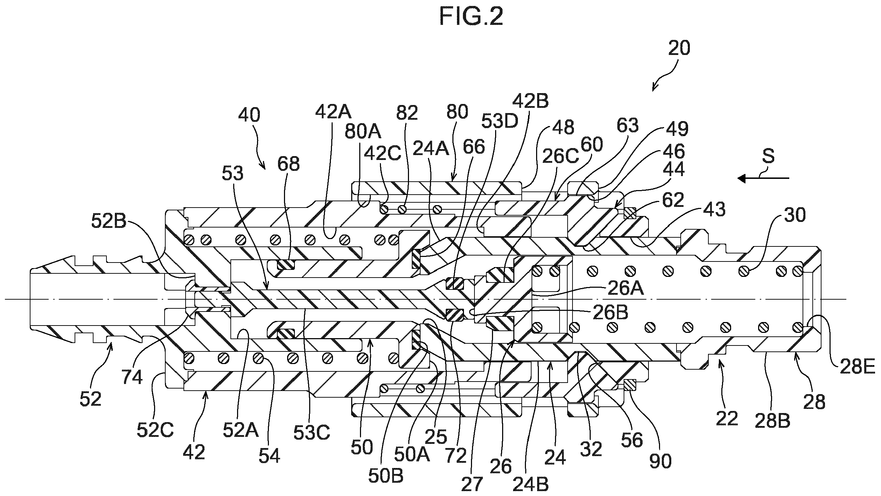

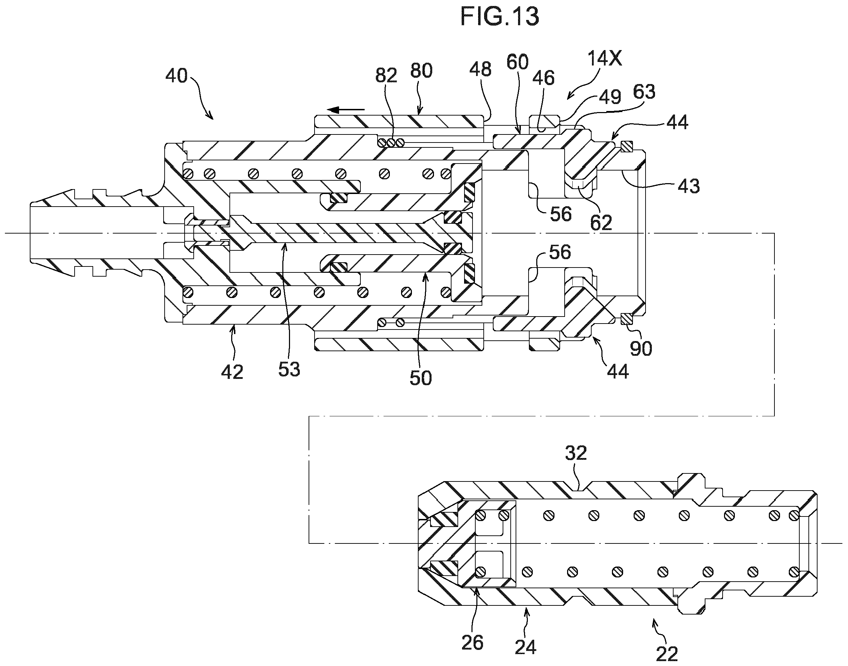

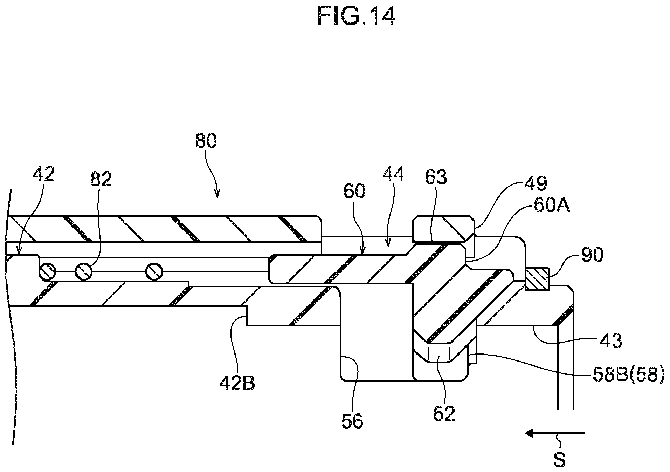

A connector 20 of the present exemplary embodiment is illustrated in Fig. 1 to Fig. 14. The connector 20 of the present exemplary embodiment is a member configuring part of a flow path, as illustrated in Fig. 1 and Fig. 2. More specifically, as illustrated in Fig. 1, the connector 20 is a member for connecting a pipe 100 to a pipe 102 together. The connector 20 includes a plug 22 and a socket 40, enabling the pipe 100 that is connected to the plug 22 and the pipe 102 that is connected to the socket 40 to be connected together by coupling the plug 22 and the socket 40 together. Note that although the connector 20 of the present exemplary embodiment configures part of a cooling flow path, the present disclosure is not limited to such a configuration.

Moreover, in the connector 20 of the present exemplary embodiment, the plug 22 and the socket 40 are coupled together by inserting the plug 22 into the socket 40. As appropriate in the following description a direction of insertion of the plug with respect to the socket 40 is referred to as a "plug insertion direction". Moreover, the direction of insertion of the plug is illustrated by an arrow S direction in Fig. 1 to Fig. 14.

### Plug 22

As illustrated in Fig. 2, Fig. 3, and Fig. 5, the plug 22 includes an indentation shaped portion 32 in an outer peripheral face thereof. The indentation shaped portion 32 is a portion for engaging with inside projection portions 62 of retainers 44, described later.

The plug 22 includes a tube body 24, a valve body 26, a pipe connection portion 28, and a coil spring 30.

The tube body 24 is a member configuring a main body of the plug 22. As illustrated in Fig. 2, part of the tube body 24 is inserted into a tube body 42 in a state in which the plug 22 and the socket 40 have been coupled together.

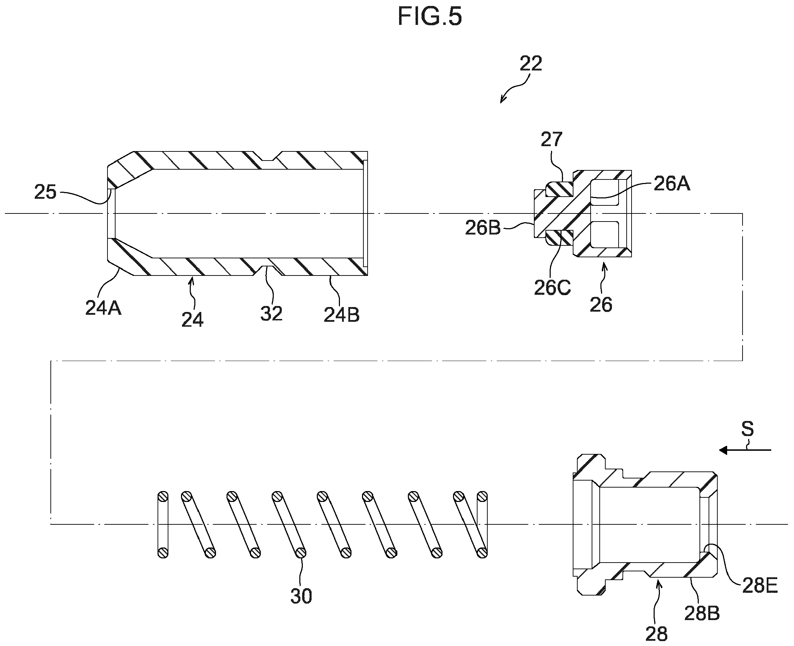

The tube body 24 has a substantially circular cylinder shape. As illustrated in Fig. 2 and Fig. 5, an end portion on the plug insertion direction side of the tube body 24 is configured by a reduced diameter portion 24A having tapering outer and inner diameters. An inner face of the reduced diameter portion 24A functions as a stopper of the valve body 26. A communication port 25 of the plug 22 is formed at the inside of the reduced diameter portion 24A. The communication port 25 of the plug 22 is a portion that communicates the inside of the socket 40 with the inside of the plug 22 in a state in which the plug 22 and the socket 40 have been coupled together.

Moreover, as illustrated in Fig. 2 and Fig. 5, the indentation shaped portion 32 referred to above is formed at an outer peripheral face 24B of the tube body 24. The indentation shaped portion 32 is formed so as to be contiguous around a circumferential direction of the tube body 24. Note that the indentation shaped portion of the present exemplary embodiment is an example of an engaged portion of the present disclosure.

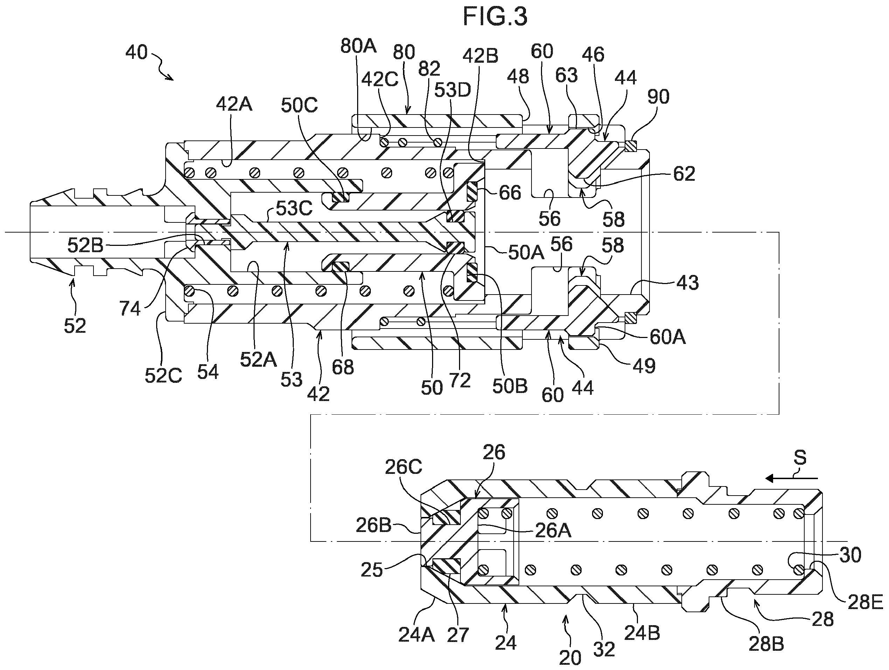

The valve body 26 is a member that opens and closes the communication port 25 of the plug 22. The valve body 26 is disposed inside the tube body 24, as illustrated in Fig. 3. The valve body 26 is configured so as to be capable of moving inside the tube body 24 in an axial direction of the tube body 24.

The valve body 26 is configured in a tube shape (for example a substantially circular cylinder shape) that is closed off at a leading end on the plug insertion direction side thereof. As illustrated in Fig. 2 and Fig. 5, a circular column shaped protrusion 26B is formed at a closed off portion 26A of the valve body 26 so as to project out in the plug insertion direction. The protrusion 26B is disposed at the inside of the reduced diameter portion 24A by resilient force of the coil spring 30. A ring shaped groove 26C contiguous around the circumferential direction of the protrusion 26B is formed at the outer peripheral face of the protrusion 26B. A ring shaped seal member 27 is inserted into the ring shaped groove 26C. The communication port 25 is closed off by the seal member 27 being pressed, together with the valve body 26, against the inner peripheral face of the reduced diameter portion 24A by the resilient force of the coil spring 30. A plug insertion direction side end portion of the coil spring 30 is inserted inside the valve body 26.

The pipe connection portion 28 is a member that connects the tube body 24 and the pipe 100 together. As illustrated in Fig. 2 and Fig. 3, the pipe connection portion 28 is attached to an opening of the tube body 24 on the opposite side thereof to the communication port 25. In the present exemplary embodiment, the pipe connection portion 28 is configured in a tube shape (for example a substantially circular cylinder shape), and is attached by welding to the opening of the tube body 24 on the opposite side thereof to the communication port 25. More specifically, a plug insertion direction side leading end of the pipe connection portion 28 is welded to the opening of the tube body 24 on the opposite side thereof to the communication port 25. Note that the present disclosure is not limited to such a configuration, and a configuration may be adopted in which the pipe connection portion 28 is mounted so as to be both attachable and detachable to/from the opening of the tube body 24 on the opposite side thereof to the communication port 25. For example, a configuration may be adopted in which the pipe connection portion 28 is mounted to the opening with sealing interposed therebetween using a fastening means such as a bolt or the like.

A jutting out portion 28E is formed at an end portion of the pipe connection portion 28 on the opposite side from tube body 24 side thereof, with the jutting out portion 28E formed so as to jut out toward the radial direction inner side of the pipe connection portion 28.

The pipe 100 is connected to the opening of the pipe connection portion 28 on the opposite side from the tube body 24 side thereof (see Fig. 1).

The coil spring 30 is a member to close the communication port 25 of the tube body 24 using resilient force. More specifically, the coil spring 30 is configured so as to press the valve body 26 against the reduced diameter portion 24A of the tube body 24 using resilient force. The coil spring 30 is disposed inside the tube body 24. The plug insertion direction side end portion on the coil spring 30 (the left side end portion in Fig. 2 and Fig. 3) is inserted inside the valve body 26 and contacted against the closed off portion 26A. The end portion on the opposite side of the coil spring 30 to the plug insertion direction (the right side end portion in Fig. 2 and Fig. 3) is inserted inside the pipe connection portion 28 and contacted against the jutting out portion 28E. Note that in the present exemplary embodiment the valve body 26 is pressed against the reduced diameter portion 24A by the resilient force of the coil spring 30, however there is no limitation to the coil spring 30 as long as there is a biasing member that biases the valve body 26 so as to be pressed against the reduced diameter portion 24A.

### Socket 40

As illustrated in Fig. 2 to Fig. 4 and Fig. 6A, the socket 40 includes the tube body 42, the retainers 44 serving as an example of holding members, and a slide cover 80 serving as an example of a cover member.

The socket 40 also includes a coil spring 82, a valve body 50, a pipe connection portion 52, and a coil spring 54.

The tube body 42 is a member configuring a main body of the socket 40. As illustrated in Fig. 2, the plug 22 is insertable into the tube body 42. An opening of the tube body 42 into which the plug 22 is inserted is hereafter called insertion port 43.

The tube body 42 has a substantially circular cylinder shape. As illustrated in Fig. 2 and Fig. 3, the retainers 44 are disposed at the radial direction outer side of the tube body 42. More specifically, plural of the retainers 44 are disposed at the radial direction outer side of the insertion port 43 of the tube body 42 spaced apart from each other (at a uniform spacing in the present exemplary embodiment) around the circumferential direction. A portion of the tube body 42 on the opposite side from the plug insertion direction has a smaller inner diameter than the portion thereof on the plug insertion direction side. In other words, in the tube body 42 the portion including the insertion port 43 on the opposite side from the plug insertion direction has a larger inner diameter than the portion on the plug insertion direction side thereof. This means that a step 42B is formed at an inner peripheral face 42A of the tube body 42 between the portion on the opposite side from the plug insertion direction and the portion on the plug insertion direction side. The step 42B extends along a radial direction of the tube body 42. The step 42B functions as a stopper for the valve body 50.

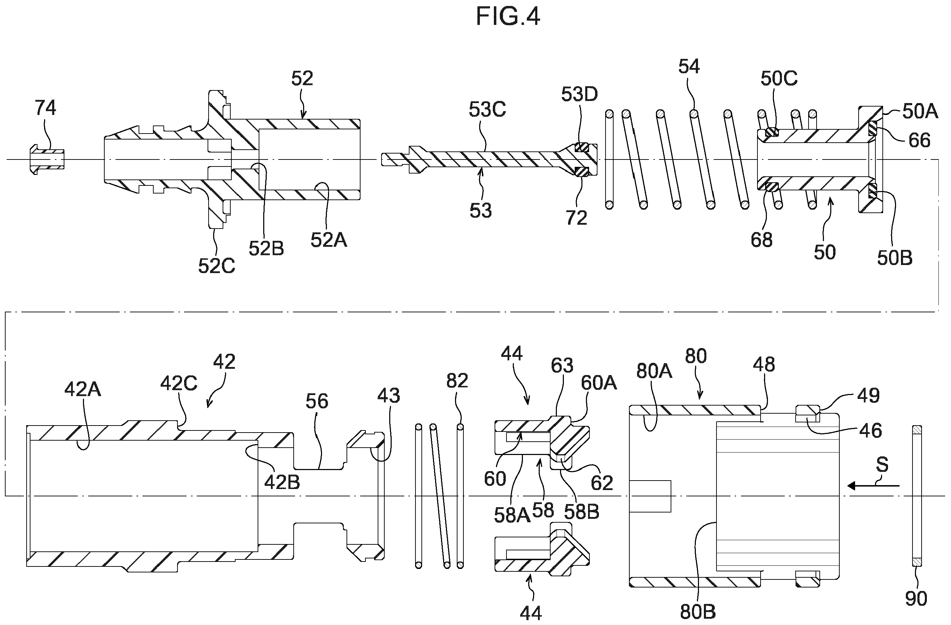

As illustrated in Fig. 1 and Fig. 4, pull-out prevention holes 56 serving as examples of pull-out prevention portions are formed at the tube body 42. The pull-out prevention holes 56 are portions that engaging claws 58 of each of the retainers 44, described later, hook onto. More specifically, the pull-out prevention holes 56 are through holes formed in portions of a peripheral wall of the tube body 42 where the insertion port 43 is formed. The retainers 44 are blocked from being pulled out from the tube body 42 by the engaging claws 58 hooking onto edges of the pull-out prevention holes 56.

The inside projection portion 62 of each of the retainers 44 is configured so as to enter into the respective pull-out prevention hole 56. The inside projection portions 62 engage with the indentation shaped portion 32 in a state in which the inside projection portions 62 are inserted into the pull-out prevention holes 56. Note that the size of the pull-out prevention holes 56 is a size enabling at least claw portions 58B of the engaging claws 58 and the inside projection portions 62 of the retainers 44, described later, to enter therein.

The pull-out prevention holes 56 are formed at the peripheral wall of the tube body 42 spaced apart from each other (at a uniform spacing in the present exemplary embodiment) around the circumferential direction. In the present exemplary embodiment, as an example, there are a pair of the pull-out prevention holes 56 formed in the peripheral wall of the tube body 42. The pair of pull-out prevention holes 56 are accordingly formed in the peripheral wall of the tube body 42 so as to oppose each other along radial directions.

Moreover, as illustrated in Fig. 3 and Fig. 4, the pipe connection portion 52 is attached by welding to the opening on the opposite side of the tube body 42 to the insertion port 43. Note that the present disclosure is not limited to such a configuration, and a configuration may be adopted in which the pipe connection portion 52 is mounted so as to be both attachable and detachable to/from the opening on the opposite side of the tube body 42 to the insertion port 43, for example, a configuration may be adopted in which the pipe connection portion 52 is mounted to this opening with sealing interposed therebetween using a fastening means such as a bolt or the like.

The retainers 44 are members for holding the inserted plug 22 inside the tube body 42. More specifically, the retainers 44 hold the plug 22 inside the tube body 42 by engagement between the indentation shaped portion 32 and the inside projection portions 62.

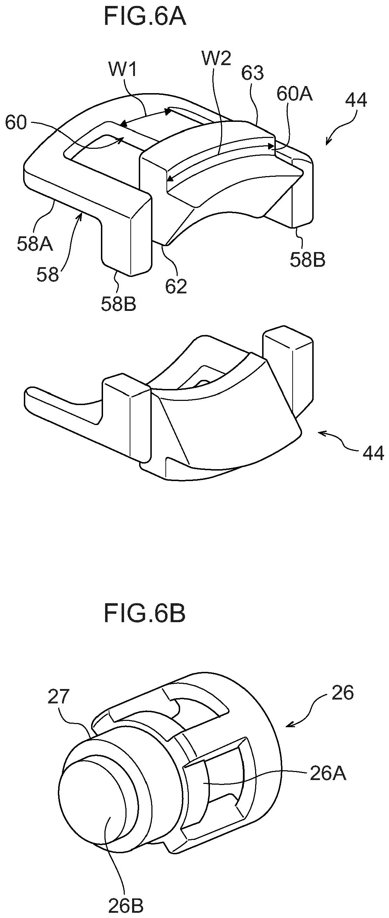

As illustrated in Fig. 6A, the retainers 44 each have a circular arc plate shape, and are disposed at the radial direction outer side of the tube body 42 so as to be movable in the axial direction of the tube body 42. More specifically, the retainers 44 are disposed at the radial direction outer side of the insertion port 43 of the tube body 42.

As illustrated in Fig. 3 and Fig. 4, the retainers 44 include the inside projection portions 62 to engage with the indentation shaped portion 32 of the plug 22 inserted into the insertion port 43. More specifically, the retainers 44 each include a resilient plate portion 60 that extends in the axial direction and has a free end configured by an end portion 60A on the opposite side from the plug insertion direction, with the inside projection portion 62 being a portion that projects out from the end portion 60A of the resilient plate portion 60 toward the radial direction inner side of the retainers 44. The inside projection portions 62 engage with the indentation shaped portion 32 by being inserted into the indentation shaped portion 32. Note that the inside projection portions 62 of the present exemplary embodiment are examples of projection portions of the present disclosure.

As illustrated in Fig. 3 and Fig. 6A, the resilient plate portion 60 of the present exemplary embodiment are each a portion formed by cut outs in a peripheral wall of each of the retainers 44. A plate width of the resilient plate portion 60 is narrower at a base end side portion than at the free end side portion thereof. More specifically, as illustrated in Fig. 6A, a plate width W1 of the base end side portion of the resilient plate portion 60 is narrower than a plate width W2 of the free end side portion of the resilient plate portion 60. For example, the resilient plate portions 60 of the present exemplary embodiment each have a substantially T-shaped profile when viewed from a radial direction outer side of the retainers 44. Note that the shape of the resilient plate portion 60 is not limited to being a substantially T-shaped profile.

Moreover, as illustrated in Fig. 4 and Fig. 6A, an outside projection portion 63 is also formed at the end portion 60A of each of the resilient plate portions 60 so as to project toward the opposite side from the inside projection portion 62, namely so as to project toward the radial direction outer side of the tube body 42.

Moreover, as illustrated in Fig. 1, Fig. 4, and Fig. 6A, the retainers 44 each include the engaging claws 58 that hook onto the pull-out prevention holes 56 of the tube body 42. The engaging claws 58 each include a plate portion 58A and the claw portion 58B. The plate portion 58A extends in the axial direction, with a free end configured at an end portion on the opposite side to the plug insertion direction side. The claw portions 58B are portions that project out from the end portion on the opposite side to the plug insertion direction side of the plate portion 58A toward the radial direction inner side of the respective retainer 44. The claw portions 58B are inserted into the pull-out prevention holes 56, and hook onto edges of the pull-out prevention holes 56 by the plug 22 moving with respect to the socket 40 toward the opposite side from the plug insertion direction. Specifically, the claw portions 58B of the engaging claws 58 hook onto edges of the pull-out prevention holes 56 when the inside projection portions 62 of the retainers 44 are at a position of a blocking portion 46 of the slide cover 80, described later. Note that in the present exemplary embodiment the engaging claws 58 are respectively provided at both sides with the resilient plate portion 60
in the middle. This thereby stabilizes an orientation of the retainers 44 when the claw portions 58B of the engaging claws 58 are hooked onto the edges of the pull-out prevention holes 56.

The slide cover 80 is a member for blocking an action to release engagement between the inside projection portions 62 and the indentation shaped portion 32. The slide cover 80 has a tubular shape (a circular cylinder shape in the present exemplary embodiment), and is disposed at the radial direction outer side of the tube body 42, as illustrated in Fig. 3. The tube body 42 is movable in the axial direction of the tube body 42. More specifically, the slide cover 80 is biased toward the opposite side from the plug insertion direction by biasing force of the coil spring 82. The biased slide cover 80 abuts a stopper 90 (for example a C-ring) provided at the tube body 42, and is confined to an initial position illustrated in Fig. 2. Note that in the following description, unless particularly stated otherwise, the slide cover 80 is confined in the initial position.

Permitting portions 48 are formed at the slide cover 80. More specifically, a recess is formed as each of the permitting portions 48 in an inner peripheral face 80A of the slide cover 80. This recess is, for example, a through hole penetrating the peripheral wall of the slide cover 80 in the thickness direction thereof. A size of each of the permitting portions 48 that are through holes is a size that the respective outside projection portions 63 of the retainers 44, described later, will enter into. Note that the permitting portions 48 in the present exemplary embodiment, as an example, each have a shape that is a substantially rectangular shape when viewed from an outside of the slide cover 80.

As illustrated in Fig. 3 and Fig. 4, the permitting portions 48 are formed at the peripheral wall of the slide cover 80 at uniform intervals in the circumferential direction. In the present exemplary embodiment, as an example, a pair of the permitting portions 48 are formed at the peripheral wall of the slide cover 80. In other words, the pair of permitting portions 48 are formed at the peripheral wall of the slide cover 80 so as to oppose each other in the radial direction.

Moreover, as illustrated in Fig. 3 and Fig. 4, the blocking portion 46 is formed at the slide cover 80. More specifically, the blocking portion 46 is formed at the inner peripheral face 80A of the slide cover 80. Even more specifically, the blocking portion 46 is a portion at the opposite side from the plug insertion direction of the permitting portions 48 in the inner peripheral face 42A of the tube body 42.

Permitting portions 49 are formed at the slide cover 80. More specifically, the permitting portions 49 are formed at the inner peripheral face 80A of the slide cover 80 so as to be formed on the axial direction opposite side from the permitting portions 48, with the blocking portion 46 between the permitting portions 49 and the permitting portions 48. The permitting portions 49 are, as an example, cut-outs in the peripheral wall of the slide cover 80 resulting from forming a cut out from an end portion on the opposite side from the plug insertion direction toward the plug insertion direction side. Note that the permitting portions 49 of the present exemplary embodiment each have, as an example, a shape that is a substantially rectangular shape when viewed from an outside of the slide cover 80.

As illustrated in Fig. 2, the blocking portion 46 is a portion of the slide cover 80 that blocks an action to release engagement of the inside projection portions 62 of the retainers 44 engaged with the indentation shaped portion 32 of the plug 22. The blocking portion 46 blocks resilient deformation of the resilient plate portion 60 when the inside projection portions 62 of the retainers 44 are at the position of the blocking portion 46 of the slide cover 80 confined to the initial position, by contact with the outside projection portions 63 that are on the radial direction opposite side from the inside projection portions 62. The inside projection portions 62 are accordingly blocked from pulling out from the indentation shaped portion 32 and the engaged state between the inside projection portions 62 and the indentation shaped portion 32 is maintained.

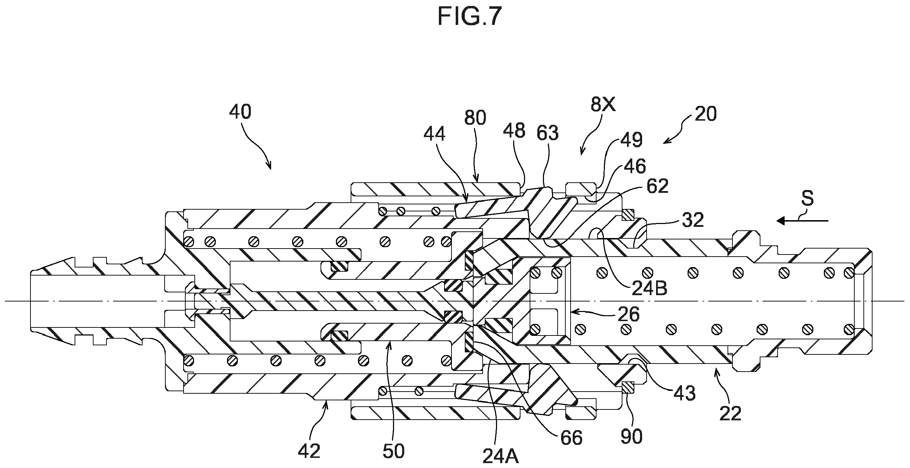

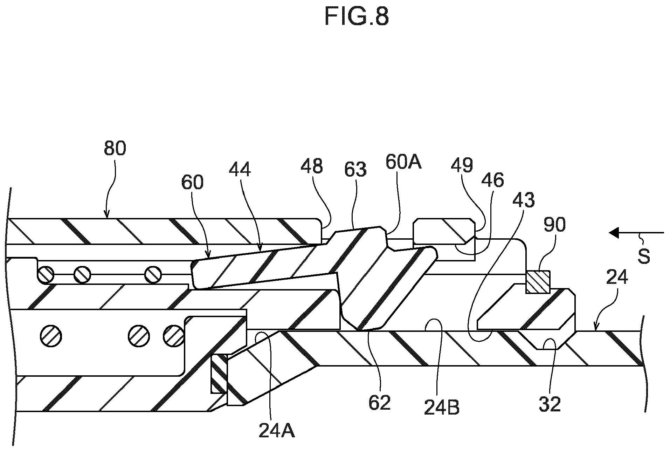

As illustrated in Fig. 7 and Fig. 8, the permitting portions 48 are portions of the slide cover 80 that permit an action to release engagement of the inside projection portions 62 of the retainers 44 engaged with the indentation shaped portion 32 of the plug 22. More specifically, the permitting portions 48 permit the movement toward the radial direction outer side of the end portions 60A and the outside projection portions 63 under resilient deformation of the resilient plate portions 60 when the inside projection portions 62 of the retainers 44 are at the position of the permitting portions 48 of the slide cover 80. Namely, as illustrated in Fig. 8, under resilient deformation of the resilient plate portion 60, the outside projection portions 63 are inserted into the through holes that are the permitting portions 48, thereby permitting movement toward the radial direction outer side of the end portions 60A and the outside projection portions 63. The inside projection portions 62 are accordingly able to pull out from the indentation shaped portion 32, enabling the engaged state between the inside projection portions 62 and the indentation shaped portion 32 to be released.

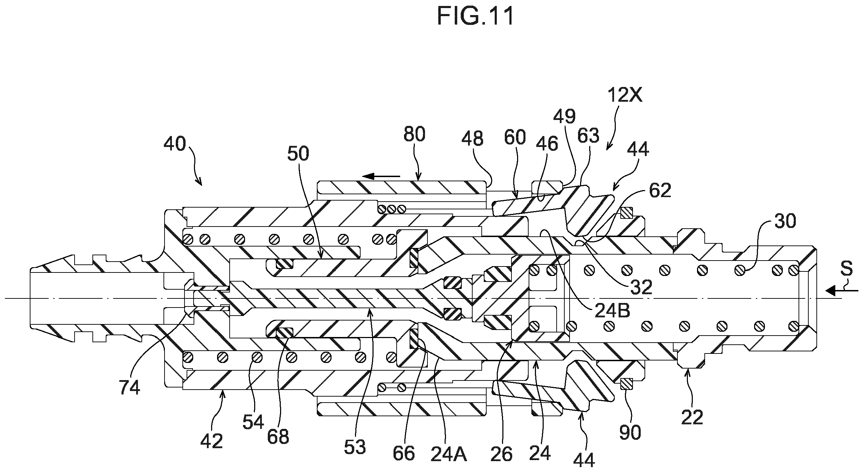

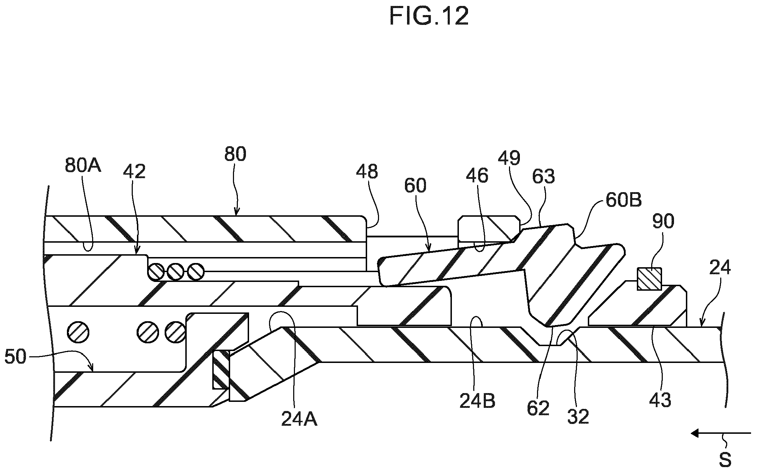

As illustrated in Fig. 11 and Fig. 12, the permitting portions 49 are portions of the slide cover 80 that permit an action to release engagement of the inside projection portions 62 of the retainers 44 engaged with the indentation shaped portion 32 of the plug 22. More specifically, the permitting portions 49 permit movement toward the radial direction outer side of the end portions 60A and the outside projection portions 63 under resilient deformation of the resilient plate portions 60 when the inside projection portions 62 of the retainers 44 are at the position of the permitting portions 49 of the slide cover 80. Namely, as illustrated in Fig. 12, the outside projection portions 63 enter the cut outs that are the permitting portions 49 under resilient deformation of the resilient plate portions 60, and movement toward the radial direction outer side of the end portions 60A and the outside projection portions 63 is permitted. The inside projection portions 62 are accordingly able to be pulled out from the indentation shaped portion 32, enabling release of the engaged state between the inside projection portions 62 and the indentation shaped portion 32.

As illustrated in Fig. 3, the coil spring 82 is disposed at the radial direction outer side of the tube body 42. More specifically, the coil spring 82 is disposed between the slide cover 80 and the tube body 42. An end portion on the plug insertion direction side of the coil spring 82 contacts a step 42C formed at the outer peripheral face of the tube body 42, and an end portion thereof on the opposite side from the plug insertion direction contacts a jutting out portion 80B (see Fig. 1 and Fig. 3) jutting out to the radial direction inner side of the slide cover 80. The slide cover 80 is accordingly biased toward the opposite side from the plug insertion direction by the biasing force of the coil spring 82.

The valve body 50 is a member that opens and closes an internal flow path of the socket 40. The valve body 50 is disposed inside the tube body 42, as illustrated in Fig. 2 and Fig. 3. The valve body 50 is movable inside the tube body 42 in the axial direction of the tube body 42.

The valve body 50 is configured with a tubular shape (as an example a substantially circular cylinder shape). As illustrated in Fig. 2 and Fig. 3, an axial portion 53 of the pipe connection portion 52, described later, is inserted inside the valve body 50. The valve body 50 moves in an axial direction inside the tube body 42 along the axial portion 53.

An end portion 50A on the opposite side from the plug insertion direction of the valve body 50 is pressed against the step 42B of the tube body 42 by the resilient force of the coil spring 54. Moreover, an insertion port 50B into which the plug insertion direction end portion of the plug 22 (plug insertion direction end portion of the tube body 24) is inserted is formed at the inside of the end portion 50A of the valve body 50. A ring shaped seal member 66 is disposed at a wall face on the plug insertion direction side of the insertion port 50B. This results in a configuration in which plug insertion direction end portion of the plug 22 contacts the seal member 66. More specifically, in a state in which the plug 22 and the socket 40 are coupled together, as illustrated in Fig. 2, the plug insertion direction end portion of the plug 22 contacts the seal member 66, sealing between the valve body 50 and the tube body 24.

Moreover, a ring shaped groove 50C that is contiguous in the circumferential direction of the valve body 50 is formed at the outer peripheral face of the valve body 50. A ring shaped seal member 68 is inserted into the ring shaped groove 50C. Sealing between the valve body 50 and an inner peripheral face 52A of the pipe connection portion 52 is achieved by the seal member 68.

The pipe connection portion 52 is a member to connect the tube body 42 and the pipe 102 together. As illustrated in Fig. 2 and Fig. 3, the pipe connection portion 52 is attached by welding to an opening of the tube body 42 on the opposite side thereof to the insertion port 43.

The pipe connection portion 52 is configured in a tube shape (as an example a substantially circular cylinder shape). A portion on the plug insertion direction side of the pipe connection portion 52 has a larger diameter than a portion of the pipe connection portion 52 on the opposite side from the plug insertion direction.

An outside jutting out portion 52C is formed at an axial direction intermediate portion of the pipe connection portion 52 so as to jut out toward the radial direction outer side. A jutting out direction end portion of the outside jutting out portion 52C is welded to the opening of the tube body 42 on the opposite side thereof to the insertion port 43.

The pipe 102 is connected to the opening of the pipe connection portion 52 on the opposite side from the tube body 42 side. A resin tube may, as an example, be employed for the pipe 102.

The pipe connection portion 52 includes the axial portion 53 at the inside of the opposite side to the plug insertion direction portion of the pipe connection portion 52. The axial portion 53 is a circular column shaped portion, and is screwed into a female thread member 74 (for example, a bush nut or the like) provided at the inside of an inside jutting out portion 52B that juts out toward the radial direction inner side from an axial direction intermediate portion of the inner peripheral face 52A of the pipe connection portion 52. More specifically, a male thread is formed at an end portion of the axial portion 53 on the opposite side from the plug insertion direction, and this end portion of the axial portion 53 is disposed at the inside of the inside jutting out portion 52B by the male thread being screwed into the female thread member 74. Through holes (omitted in the drawings) are formed so as to pierce through the inside jutting out portion 52B in the thickness direction thereof spaced apart from each other in the circumferential direction. More specifically, these through holes are formed though the inside jutting out portion 52B so as to extend in the axial direction of the tube body 42. These through holes configure the internal flow path of the socket 40.

A ring shaped groove 53D contiguous in the circumferential direction of the axial portion 53 is formed at an outer peripheral face 53C of the axial portion 53 at an end portion on the opposite side from the plug insertion direction thereof. A ring shaped seal member 72 is inserted into the ring shaped groove 53D. Sealing between the inner peripheral face of the valve body 50 and the axial portion 53 is accordingly achieved by the seal member 72.

In a coupled state of the plug 22 and the socket 40, as illustrated in Fig. 2, the seal between the inner peripheral face of the valve body 50 and the axial portion 53 is released, so as to link together an internal flow path of the plug 22 and an internal flow path of the socket 40.

The coil spring 54 is a member that closes the internal flow path of the tube body 42 by resilient force. More specifically, the coil spring 54 is configured such that the valve body 50 is pressed by resilient force against the step 42B of the tube body 42. The coil spring 54 is disposed inside the tube body 42. A plug insertion direction side end portion of the coil spring 54 (left side end portion in Fig. 2 and Fig. 3) is inserted between the outer peripheral face of the pipe connection portion 52 and the inner peripheral face of the tube body 42, so as to be supported by the outside jutting out portion 52C. The end portion of the coil spring 54 on the opposite side from the plug insertion direction (right side end portion in Fig. 2 and Fig. 3) contacts the valve body 50. Note that although in the present exemplary embodiment the valve body 50 is pressed against the step 42B by the resilient force of the coil spring 54, there is no limitation to employing the coil spring 54 as long as there is a biasing member to bias the valve body 50 so as to be pressed against the step 42B.

Next, description follows regarding an action to couple the plug 22 and the socket 40 together in the present exemplary embodiment, and an action to release such coupling.

First description follows regarding the action to couple the plug 22 and the socket 40 together.

As illustrated in Fig. 7, the plug 22 is inserted inside the tube body 42. When the tube body 24 of the plug 22 has been inserted into an insertion port 23 of the plug 22, the valve body 50 of the socket 40 abuts the end portion of the tube body 24 of the plug 22.

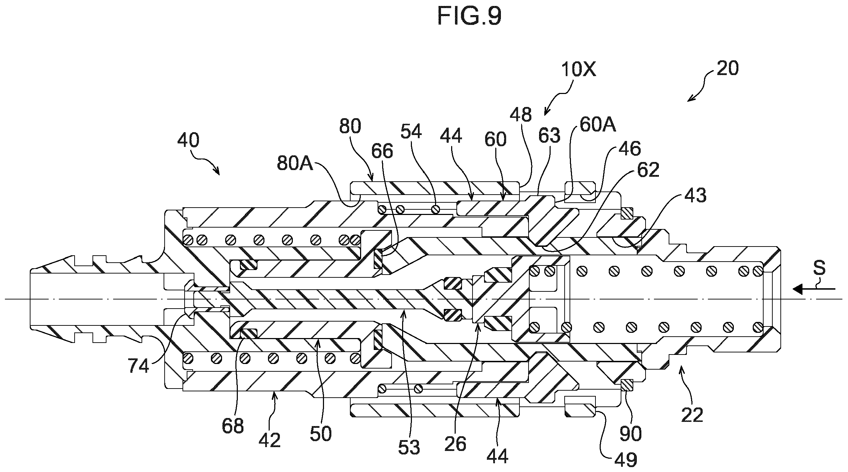

As illustrated in Fig. 9, when the plug 22 is inserted further into the tube body 42, the valve body 50 is pressed in the plug insertion direction by the end portion of the tube body 24 of the plug 22. When this occurs the valve body 26 is pressed inside the tube body 24 by the axial portion 53 of the socket 40. The internal flow path of the plug 22 is opened thereby, together with the internal flow path of the socket 40 also being opened thereby, communicating the internal flow path of the plug 22 with the internal flow path of the socket 40.

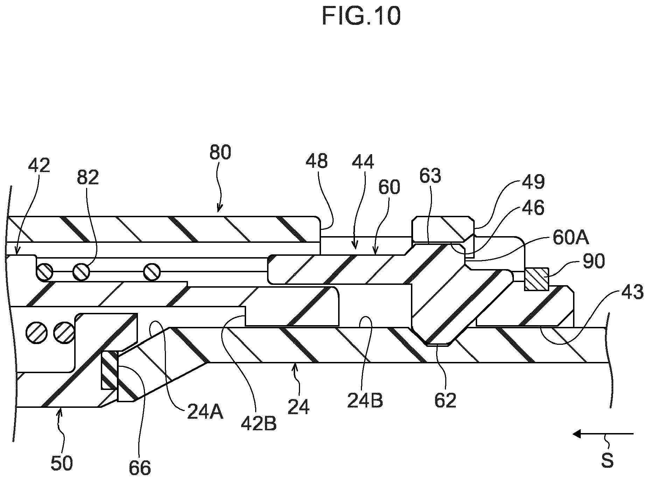

As illustrated in Fig. 7, when the plug 22 is inserted inside the tube body 42, the inside projection portions 62 of the retainers 44 contact the outer peripheral face of the reduced diameter portion 24A of the tube body 24, and the retainers 44 are moved in the axial direction of the tube body 42 together with the plug 22. Movement of the retainers 44 in the plug insertion direction is blocked when the claw portions 58B of the engaging claws 58 of the retainers 44 contact edges on the plug insertion direction side of the pull-out prevention holes 56. When this occurs, the inside projection portions 62 of the retainers 44 are at the position of the permitting portions 48 in the axial direction of the slide cover 80, namely the outside projection portions 63 of the retainers 44 are at the position of the permitting portions 48 in the axial direction of the slide cover 80. In cases in which the inside projection portions 62 have passed the reduced diameter portion 24A, the resilient plate portions 60 resiliently deform (flex) toward the radial direction outer side, the outside projection portions 63 are inserted into the through holes that are the permitting portions 48, and movement toward the radial direction outer side of the end portions 60A and the outside projection portions 63 is permitted. When the inside projection portions 62 reach the indentation shaped portion 32 (see Fig. 9 and Fig. 10), the resilient plate portions 60 recover, the inside projection portions 62 are inserted into the indentation shaped portion 32, and the inside projection portions 62 engage with the indentation shaped portion 32 (see Fig. 9).

As illustrated in Fig. 9, when pressing of the plug 22 into the socket 40 is stopped in a state in which the inside projection portions 62 have engaged with the indentation shaped portion 32, the plug 22 is pushed back toward the opposite side from the plug insertion direction (see Fig. 3) by the resilient force (recovery force) of the coil spring 30 and the coil spring 54. Due to the inside projection portions 62 being engaged with the indentation shaped portion 32, the retainers 44 move together with the plug 22 toward the opposite side from the plug insertion direction. The movement of the plug 22 and the retainers 44 is blocked by the engaging claws 58 hooking on the edges on the opposite side from the plug insertion direction of the pull-out prevention holes 56. When this occurs, the inside projection portions 62 of the retainers 44 are at the position of the blocking portion 46 in the axial direction of the slide cover 80, and the outside projection portions 63 contact the blocking portion 46, so as to block resilient deformation (flexing) of the resilient plate portions 60 toward the radial direction outer side. The plug 22 is thereby coupled to the tube body 42 through the retainers 44, namely coupled to the socket 40. Moreover, an action to release engagement of the inside projection portion 62 is blocked while the inside projection portions 62 of the retainers 44 are at the position of the blocking portion 46 of the tube body 42, and so the coupling between the plug 22 and the socket 40 is maintained.

Next, description follows regarding an action to release the coupling between the plug 22 and the socket 40.

First, as illustrated in Fig. 11, the slide cover 80 is moved (slid) in the plug insertion direction. In this state the inside projection portions 62 of the retainers 44 are at the position of the permitting portions 49 of the slide cover 80, resulting in a state in which the resilient plate portions 60 are able to resiliently deform. When this occurs, the resilient plate portions 60 of the retainers 44 are deformed resiliently toward the radial direction outer side by the plug 22 receiving biasing force from the coil spring 54, and the inside projection portions 62 are pulled out from the indentation shaped portion 32. When the inside projection portions 62 are pulled out from the indentation shaped portion 32 (in other words when the engaged state is released), the plug 22 is pushed out from the socket 40 by the biasing force of the coil spring 54, and the plug 22 separates from the socket 40 and coupling therebetween is released.

Next, description follows regarding operation and advantageous effects of the present exemplary embodiment.

In the connector 20 of the present exemplary embodiment, the plug 22 and the socket 40 are coupled together by the plug 22 being inserted into the tube body 42 of the socket 40 such that the inside projection portions 62 are inserted into the indentation shaped portion 32. The plug 22 is thereby coupled to the tube body 42, namely to the socket 40, through the retainers 44. In the connector 20, the action to release engagement of the inside projection portions 62 is blocked when the inside projection portions 62 of the retainers 44 are at the position of the blocking portion 46 of the slide cover 80, and coupling between the plug 22 and the socket 40 is maintained.

Then in the connector 20, the action to release engagement of the inside projection portions 62 is permitted when the inside projection portions 62 of the retainers 44 are at the position of the permitting portions 48 of the slide cover 80 (for example, the inside projection portions 62 of the retainers 44 have been moved from the position of the blocking portion 46 of the tube body 42 to the position of the permitting portions 48). More specifically, movement toward the radial direction outer side of the plug insertion direction side end portion of the resilient plate portions 60 under resilient deformation thereof is permitted by the permitting portions 48. The engaged state between the inside projection portions 62 of the retainers 44 and the indentation shaped portion 32 is released by this engagement release action, the plug 22 separates from the socket 40, and the coupling therebetween is released.

In the connector 20, coupling between the plug 22 and the socket 40, and coupling release therebetween, can be performed by a simple configuration of the socket 40 in which the blocking portion 46 and the permitting portions 48 are provided at the slide cover 80, and also the inside projection portions 62 are provided at the retainers 44.

Moreover, in the connector 20, due to the permitting portions 48 of the socket 40 being configured by the through holes piercing through the slide cover 80 in the thickness direction thereof, the position of the retainers 44 disposed at the inside of the slide cover 80 can be visually inspected from the outside of the socket 40 through these through holes.

In the connector 20, due to the plate width of the resilient plate portions 60 being narrower at the base side portions thereof than at the free end side portions thereof, the resilient deformation amount of the resilient plate portions 60 is more easily controlled than, for example, a configuration in which the plate width of the base end side portions of the resilient plate portion is not less than the plate width of the free end side portions thereof.

Moreover in the connector 20, the retainers 44 are blocked from coming out from the tube body 42 by the engaging claws 58 of the retainers 44 hooking onto the pull-out prevention holes 56 of the tube body 42. This thereby enables the retainers 44 to be prevented from falling out from socket 40 prior to coupling of the plug 22.

Moreover in the connector 20, the plug 22 inserted through between the retainers 44 is biased toward the opposite side from the plug insertion direction by the resilient force (recovery force) of the coil spring 54, and so the engaging claws 58 hook onto the pull-out prevention holes 56. In a state in which the engaging claws 58 have been hooked onto the pull-out prevention holes 56, the inside projection portions 62 of the retainers 44 are at the position of the blocking portion 46 of the tube body 42, the engagement release action of the inside projection portions 62 is accordingly blocked, and the coupling between the plug 22 and the socket 40 is maintained. Namely, in the connector 20, the coupling between the plug 22 and the socket 40 can be maintained by the resilient force (recovery force) of the coil spring 54.

Moreover in the connector 20, the slide cover 80 is biased toward the opposite side from the plug insertion direction. When the slide cover 80 is moved toward the opposite side from the plug insertion direction, the inside projection portions 62 of the retainers 44 are moved relative to the slide cover 80 from the position of the blocking portion 46 to the position of the permitting portions 49. Due to the slide cover 80 being moved in the axial direction of the tube body 42 in this manner, simple switching from the outside of the socket 40 can be achieved between a state in which the engagement release action is enabled, and a state in which the engagement release action is blocked, even without moving the retainers 44. Furthermore, in the connector 20, the slide cover 80 is biased toward the opposite side from the plug insertion direction, and so the slide cover 80 can be confined to a specific position in the coupled state between the plug 22 and the socket 40. Namely, the tube body axial direction positions of the blocking portion 46 and the permitting portions 48, 49 can be made so as to be at definite positions when in the coupled state of the plug and the socket. This thereby enables the plug 22 to be suppressed from coming out from the socket 40.

Moreover, in the connector 20 there are plural of the retainers 44 including the inside projection portions 62 are disposed spaced apart from each other around the circumferential direction of the tube body 42, the structure of the retainers 44 is accordingly simple and the moldabilty of the retainers 44 is improved.

In the exemplary embodiment described above, the permitting portions 48 are configured by through holes piercing through the peripheral wall of the slide cover 80 in the thickness direction thereof, however the present disclosure is not limited to such a configuration. For example, the permitting portions 48 may be configured by recesses formed at the inner peripheral face 80A of the slide cover 80 that do not pierce through the peripheral wall.

In the exemplary embodiment described above, the plate width of the resilient plate portions 60 is configured so as to be narrower at the base side portions thereof than at the free end side portions thereof, however the present disclosure is not limited to such a configuration. For example, without a change in the plate width of the resilient plate portions 60, the plate thickness of the resilient plate portions 60 may be configured so as to be thinner at the base side portions thereof than at the free end side portions thereof, or the plate width and the plate thickness of the resilient plate portions 60 may be configured so as to be both respectively narrower and thinner at the base side portions thereof than at the free end side portions thereof.

In the exemplary embodiment described above, there are two of the retainers 44 disposed at the outer periphery of the tube body 24, however the present disclosure is not limited to such a configuration. For example, three or more of the retainers 44 may be disposed thereat, or a single of the retainers 44 may be provided. Note that when a single retainer 44 configuration is adopted, plural inside projection portions 62 are provided thereto.

In the exemplary embodiment described above the permitting portions 49 are configured by cut outs, however the present disclosure is not limited to such a configuration. For example, the permitting portions 49 may be configured by through holes provided at the slide cover 80 at the opposite side of the blocking portion 46 to the permitting portions 48.

Although embodiments for implementing the present disclosure have been described by way of exemplary embodiments, the exemplary embodiments are merely examples, and various modifications may be implemented within a range not departing from the spirit of the present disclosure. Obviously a scope of rights of the present disclosure is not limited to these exemplary embodiments.

## Claims

1. A connector, comprising:
a plug including an engaged portion provided on an outer peripheral face thereof; and
a socket including:
a tube body,
a holding member that is disposed at a radial direction outer side of the tube body so as to be movable in an axial direction of the tube body and that includes an engagement portion configured to resiliently engage with the engaged portion of the plug when the plug is inserted into the tube body, and
a cover member including a blocking portion that is disposed further toward a radial direction outer side of the tube body than the holding member and that blocks an action to release engagement of the engagement portion with the engaged portion, and including a permitting portion that is disposed at a position on the cover member further toward a side of an insertion direction of the plug than the blocking portion and that permits the action to release engagement of the engagement portion with the engaged portion.

2. The connector of claim 1, wherein:
the engaged portion is configured by an indentation shaped portion formed at an outer peripheral face of the plug,
the holding member includes a resilient plate portion that extends along an axial direction of the tube body and that has an end portion on an opposite side from the plug insertion direction configured by a free end,
the engagement portion is configured by a projection portion that projects from the end portion on the opposite side from the plug insertion direction toward a radial direction inner side of the tube body and that is insertable into the indentation shaped portion, and
the permitting portion is configured by a recess that is formed at an inner face of the cover member and that permits movement under resilient deformation of the resilient plate portion toward a radial direction outer side of the end portion of the resilient plate portion on the opposite side from the insertion direction.

3. The connector of claim 2, wherein the recess is a through hole penetrating the cover member in a thickness direction.

4. The connector of claim 2 or claim 3, wherein the plate width of the resilient plate portion is narrower at a base side portion than at a free end side portion.

5. The connector of any one of claim 1 to claim 4, wherein:
the holding member includes an engaging claw, and
the tube body includes a pull-out prevention portion that is provided at a peripheral wall and that blocks the holding member from being pulled out from the tube body, by the engaging claw hooking onto the pull-out prevention portion.

6. The connector of claim 5, wherein, when the engagement portion of the holding member is at a position of the blocking portion of the tube body, the engaging claw hooks onto the pull-out prevention portion.

7. The connector of claim 6, wherein:
a biasing member is disposed inside the tube body to bias the plug inserted through the holding member toward an opposite side from the plug insertion direction, and
the engaging claw is hooked onto the pull-out prevention portion by a biasing force of the biasing member.

8. The connector of any one of claim 1 to claim 7, wherein the cover member is movable in an axial direction of the tube body, and is biased toward an opposite side from the plug insertion direction.

9. The connector of any one of claim 1 to claim 8, wherein a plurality of holding members are disposed spaced apart from each other in a circumferential direction of the tube body.

10. A socket, comprising:
a tube body;
a holding member that is disposed at a radial direction outer side of the tube body so as to be movable in an axial direction of the tube body and that includes an engagement portion configured to resiliently engage with an engaged portion provided at an outer peripheral face of a plug that is insertable into the tube body; and
a cover member that includes:
a blocking portion that is disposed further toward a radial direction outer side of the tube body than the holding member and that blocks an action to release engagement of the engagement portion with the engaged portion, and
a permitting portion that is disposed at a position on the cover member further toward a side of an insertion direction of the plug than the blocking portion and that permits the action to release engagement of the engagement portion with the engaged portion.
